# EUROPEAN PATENT APPLICATION

(11) **EP 3 460 779 A1**
(43) Date of publication of application: **27.03.2019**
(21) Application number: 16902353.8
(22) Date of filing: 17.05.2016
(51) Int. Cl.: G08G 1/0968, G01C 21/26, G08G 1/04

(54) **INFORMATION OUTPUT DEVICE, TERMINAL DEVICE, CONTROL METHOD, PROGRAM, AND STORAGE MEDIUM**

(71) Applicant: Pioneer Corporation, Tokyo 113-0021 (JP)
(72) Inventor: IWAI, Tomoaki, Kawagoe-shi Saitama 350-8555 (JP)
(74) Representative: Viering, Jentschura & Partner mbB Patent- und Rechtsanwälte
(86) International application number: PCT/JP2016/064598
(87) International publication number: WO 2017/199333

(57) **Abstract**

A sever device 4 stores a three-dimensional point cloud DB 43. When receiving, from a vehicle mounted device 1, a point cloud information request signal Sr including LIDAR specification information IL on specifications of a LIDAR 2 and a predicted own vehicle position Ppr, the server device 4 specifies a scan target space by the LIDAR 2. Then, the sever device 4 extracts, from the three-dimensional point cloud DB 43, map point cloud information Da corresponding to a point cloud situated within the specified scan target space, and transmits the map point cloud information Da to the vehicle mounted device 1.

## Description

### TECHNICAL FIELD

The present invention relates to a technology for outputting information.

### BACKGROUND TECHNIQUE

There is known a method for accurately estimating the present position by using an external sensor. For example, Patent Reference-1 discloses a method for estimating the own position by matching observation results of external sensor which observes a landmark in the vicinity of the moving body with a global map which includes information associated with landmarks situated in all areas.

Patent Reference-1: Japanese Patent Application Laid-open under No. 2008-165275

### DISCLOSURE OF INVENTION

### PROBLEM TO BE SOLVED BY THE INVENTION

In cases of an own position estimation at autonomous driving, since the data capacity of the global map as described in Patent Reference-1 is likely to be huge. In this case, a server device stores and manages the global map while a terminal in the moving body acquires information associated with landmark(s) in the vicinity of the own position from the server device as needed. In this case, if the terminal in the moving body acquires from the server device all information associated with landmarks in the vicinity, data traffic will increase along with the increase of the processing load to select information needed to estimate the own position.

The above is an example of the problem to be solved by the present invention. An object of the present invention is to provide an information output device capable of suitably reducing the amount of output data.

### MEANS FOR SOLVING THE PROBLEM

One invention is an information output device including: an acquisition unit configured to acquire specification information associated with specification (s) of an external detection device provided at a moving body; and an output unit configured to extract, from feature information associated with features, a part of the feature information based on the specification information and to output the part, the feature information being stored on a storage unit.

Another invention is a terminal device which moves together with a moving body equipped with an external detection device, the terminal device including: a storage unit configured to store specification information associated with specification (s) of the external detection device; a transmission unit configured to send the specification information to the information output device; a receiving unit configured to receive feature information from the information output device; and an estimation unit configured to estimate a present position based on the feature information and detection information of the external detection device.

Still another invention is a control method executed by an information output device including: an acquisition process to acquire specification information associated with specification(s) of an external detection device provided at a moving body; and an output process to extract, from feature information associated with features, a part of the feature information based on the specification information and to output the part, the feature information being stored on a storage unit.

Still another invention is a program executed by a computer, the program making the computer function as: an acquisition unit configured to acquire specification information associated with specification(s) of an external detection device provided at a moving body; and an output unit configured to extract, from feature information associated with features, a part of the feature information based on the specification information and to output the part, the feature information being stored on a storage unit.

### BRIEF DESCRIPTION OF THE DRAWINGS

FIG. 1 illustrates a schematic configuration of an advanced map system.
FIG. 2A illustrates a schematic configuration of a vehicle mounted device.
FIG. 2B illustrates a data structure of LIDAR specification information.
FIG. 3 illustrates a schematic configuration of a server device.
FIG. 4 illustrates a block diagram illustrating functional configuration of the vehicle mounted device.
FIG. 5A illustrates features that are buildings and the like in the vicinity of the vehicle mounted device and that are irradiated with laser beams from the LIDAR.
FIG. 5B illustrates a point cloud that corresponds to positions irradiated with the laser beams.
FIG. 6A illustrates a visualized point cloud in the vicinity of the vehicle registered on the three-dimensional point cloud DB.
FIG. 6B illustrates a point cloud that corresponds to map point cloud information.
FIG. 7 is a flowchart indicative of the procedure of the own vehicle position estimation process according to the embodiment.

### DETAILED DESCRIPTION OF THE PREFERRED EMBODIMENTS

According to a preferable embodiment of the present invention, there is provided an information output device including: an acquisition unit configured to acquire specification information associated with specification (s) of an external detection device provided at a moving body; and an output unit configured to extract, from feature information associated with features, a part of the feature information based on the specification information and to output the part, the feature information being stored on a storage unit. The term "to extract a part of the feature information" herein indicates extracting a part of the feature information stored on the storage unit on the basis of the specification information. Thus, in such a case that feature information associated with a predetermined number of features is stored on the storage unit, the term not only includes extracting whole feature information associated with feature(s) which entirely correspond but also extracting only a corresponding part of feature information associated with feature(s) which partially correspond. According to this embodiment, on the basis of the specification information associated with the specification (s) of the external detection device, the information output device can suitably limit feature information to be outputted by the information output device.

In one mode of the information output device, the output unit specifies a detection range by the external detection device based on the specification information and the output unit extracts and outputs the feature information associated with a feature situated within the detection range. According to this mode, the information output device can suitably output the feature information within the detection range of the external detection device to thereby make it be used for matching process with the detection information of the external detection device.

In another mode of the information output device, the specification information includes information associated with height of installation position of the external detection device or information associated with a target range of detection by the external detection device in a horizontal direction and/or vertical direction. According to this mode, the information output device suitably specifies the detection range of the external detection device to thereby determine the feature information to be extracted.

In still another mode of the information output device, the acquisition unit receives the specification information and position information of the moving body from a terminal device which receives detection information of the external detection device, and the output unit sends the terminal device the part of the feature information extracted on a basis of the specification information and the position information. According to this mode, the information output device can suitably let the terminal device acquire the detection information of the external detection device and the feature information corresponding to the above detection information.

According to another preferable embodiment of the present invention, there is provided a terminal device which moves together with a moving body equipped with an external detection device, the terminal device including: a storage unit configured to store specification information associated with specification (s) of the external detection device; a transmission unit configured to send the specification information to the information output device; a receiving unit configured to receive feature information from the information output device; and an estimation unit configured to estimate a present position based on the feature information and detection information of the external detection device. According to this mode, the terminal device receives, from the information output device which stores the feature information, minimum feature information needed to estimate the present position. Thereby, the terminal device can efficiently estimate the present position.

In one mode of the terminal device, each of the detection information and the feature information is point cloud information, and the estimation unit estimates the present position based on error in position between a first point cloud indicated by the detection information and a second point cloud indicated by the feature information corresponding to the first point cloud. According to this mode, with reference to the point cloud information associated with features which the information output device stores in advance, the terminal device can accurately estimate ownposition based on the point cloud information outputted by the external detection device.

In another mode of the terminal device, the terminal device further includes a position prediction unit configured to acquire a prediction value of the present position based on output data of a measurement unit, wherein the estimation unit calculates an estimate value of the present position by correcting the prediction value based on the feature information and the detection information. According to this mode, the terminal device can acquire a present position that is more accurate than the measured present position by the measurement unit.

According to another preferable embodiment of the present invention, there is provided a control method executed by a information output device including: an acquisition process to acquire specification information associated with specification(s) of an external detection device provided at a moving body; and an output process to extract, from feature information associated with features, a part of the feature information based on the specification information and to output the part, the feature information being stored on a storage unit. By executing the control method, on the basis of the specification information associated with the specification (s) of the external detection device, the information output device can suitably limit the feature information to be outputted.

According to another preferable embodiment of the present invention, there is provided a program executed by a computer, the program making the computer function as: an acquisition unit configured to acquire specification information associated with specification(s) of an external detection device provided at a moving body; and an output unit configured to extract, from feature information associated with features, a part of the feature information based on the specification information and to output the part, the feature information being stored on a storage unit. By executing the program, on the basis of the specification information associated with the specification (s) of the external detection device, a computer can suitably limit the feature information to be outputted. Preferably, the program can be treated in a state that it is stored in a storage medium.

### EMBODIMENT

Now, a preferred embodiment of the present invention will be described below with reference to the attached drawings. The term "point cloud" according to the embodiment indicates an aggregate of points whose three-dimensional positions are identified (specified) and the term "three-dimensional point cloud" indicates a point cloud which is distributed in the three dimensions (i.e., spacially distributed).

### [Overview of Advanced Map System]

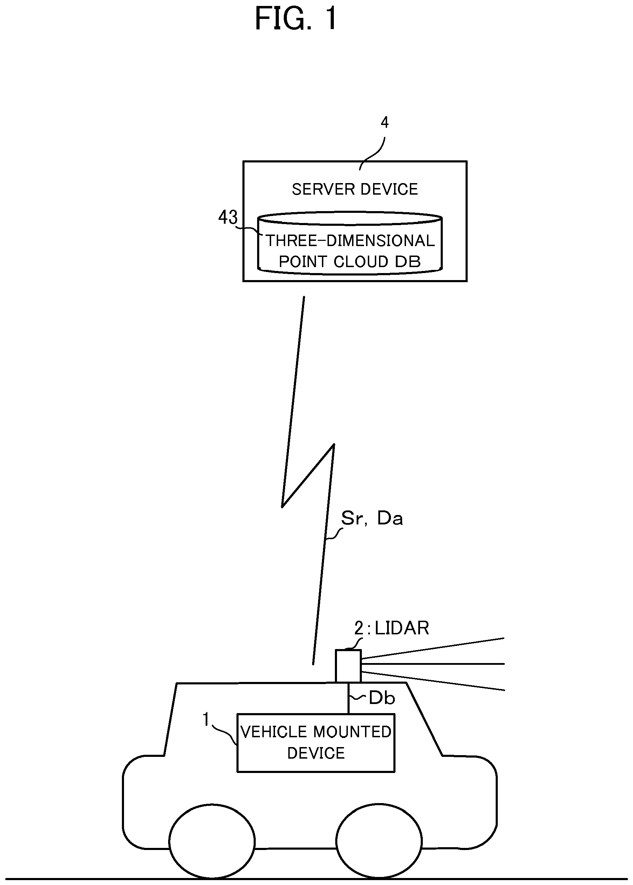

FIG. 1 illustrates a schematic configuration of an advanced map system according to the embodiment. The advanced map system includes a vehicle mounted device 1 which moves together with a vehicle, a LIDAR (Light Detection and Ranging, or Laser Illuminated Detection and Ranging) 2 which is controlled by the vehicle mounted device 1, and a server device 4 which stores a three-dimensional point cloud DB 43, wherein the three-dimensional point cloud DB 43 is a database of three-dimensional point clouds each of which discretely constitutes the surface of a feature (examples of which include a natural product and an artificial product) on or around a road. The advanced map system accurately estimates the own vehicle position by matching a point cloud measured by the LIDAR 2 with a point cloud registered on the three-dimensional point cloud DB 43.

The vehicle mounted device 1 is electrically connected to the LIDAR 2 and controls the light emission of the LIDAR 2 to detect a feature. According to the embodiment, the vehicle mounted device 1 preliminarily stores information (referred to as "LIDAR specification information IL") associated with the specification (s) of the LIDAR 2. Then, the vehicle mounted device 1 sends a request signal (referred to as "point cloud information request signal Sr") to the sever device 4, wherein the point cloud information request signal Sr includes the LIDAR specification information IL and the own vehicle position (referred to as "predicted own vehicle position Ppr") which the vehicle mounted device 1 predicts based on output data from measurement unit(s) such as a GPS receiver to be mentioned later. In response, the vehicle mounted device 1 receives, from the sever device 4, point cloud information (referred to as "map point cloud information Da") extracted from the three-dimensional point cloud DB 43 based on the LIDAR specification information IL and the predicted own vehicle position Ppr. On the basis of point cloud information (referred to as "measured point cloud information Db") outputted by the LIDAR 2 and the map point cloud information Da sent from the sever device 4, the vehicle mounted device 1 calculates an error of the predicted own vehicle position Ppr to calculate the estimate value of the own vehicle position by correcting the predicted own vehicle position Ppr based on the calculated error. The vehicle mounted device 1 is an example of the "terminal device" according to the present invention.

The LIDAR 2 discretely measures distance to an external object by emitting pulse laser beams within a predetermined angle range (angle of field) in the horizontal direction and in the vertical direction to thereby generate three-dimensional point cloud information indicative of the position of the external object as the measured point cloud information Db. In this case, the LIDAR 2 includes an emitting unit to emit laser light while changing the emitting direction, a light receiving unit to receive the reflective light (scattering light) of the emitted laser light and an output unit to output point cloud information based on the receiving signal outputted by the light receiving unit. The point cloud information is generated based on the emitting direction of the laser light received by the light receiving unit and the response delay time of the laser light specified based on the above-mentioned receiving signal. It is noted that the LIDAR 2 may generate two-dimensional point cloud information by emitting pulse laser beams only within a predetermined angle range in the horizontal direction without scanning in the vertical direction. Then, the LIDAR 2 supplies the generated measured point cloud information Db to the vehicle mounted device 1. The measured point cloud information Db is expressed by a relative coordinate system with respect to the vehicle mounted device 1. The LIDAR 2 is an example of the "external detection device" according to the present invention.

The server device 4 stores map data including the three-dimensional point cloud DB 43. When receiving the point cloud information request signal Sr from the vehicle mounted device 1, the sever device 4 recognizes, on the basis of the LIDAR specification information IL and the predicted own vehicle position Ppr included in the point cloud information request signal Sr, a target space (referred to as "scan target space") of measurement by the LIDAR 2. Then, the sever device 4 extracts, from the three-dimensional point cloud DB 43, the map point cloud information Da that is information associated with a point cloud whose positions are within the scan target space and sends the map point cloud information Da to the vehicle mounted device 1. The sever device 4 is an example of the "information output device" according to the present invention. The scan target space is an example of the "detection range" according to the present invention. The scan target space may be not only a three-dimensional space but also a two-dimensional space.

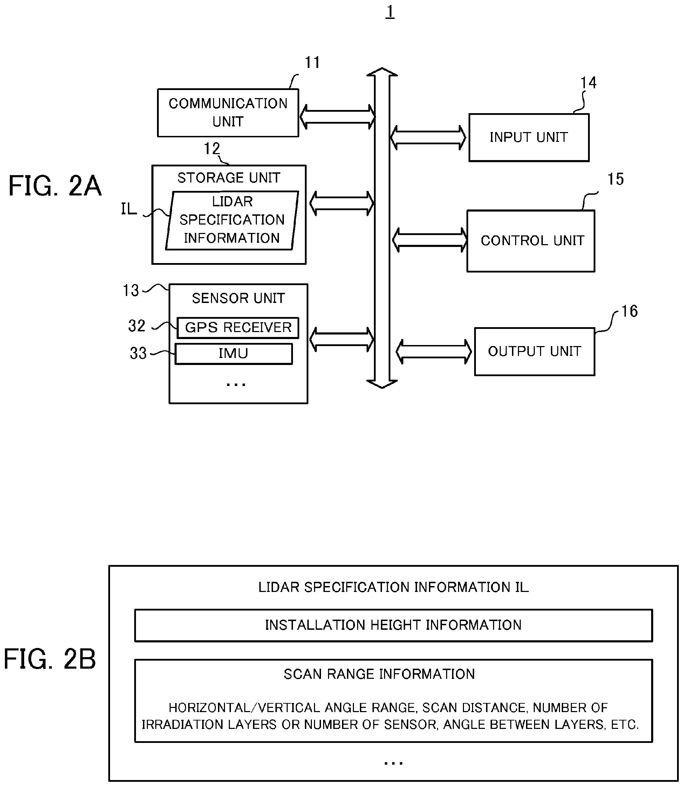

FIG. 2A is a block diagram illustrating a functional configuration of the vehicle mounted device 1. The vehicle mounted device 1 mainly includes a communication unit 11, a storage unit 12, a sensor unit 13, an input unit 14, a control unit 15 and an output unit 16. These elements are connected to each other via a bus line.

Under the control of the control unit 15, the communication unit 11 exchanges data with the server device 4.

The storage unit 12 stores a program to be executed by the control unit 15 and information necessary for the control unit 15 to execute a predetermined processing. According to the embodiment, the storage unit 12 stores the LIDAR specification information IL in advance. The LIDAR specification information IL is an example of the "specification information" according to the present invention.

FIG. 2B illustrates an example of a data structure of the LIDAR specification information IL. As illustrated in FIG. 2B, the LIDAR specification information IL includes installation height information and scan range information. The installation height information herein indicates the relative installation height of the LIDAR 2 with respect to the vehicle which the LIDAR 2 is installed. For example, the installation height information indicates the installation height of the LIDAR 2 from a horizontal plane when the vehicle exists on the horizontal plane. The scan range information herein indicates the measurable range of the LIDAR 2 relative to the vehicle. For example, the scan range information indicates: the target horizontal angle range and vertical angle range of scan by the LIDAR 2 from a predetermined direction (e.g., traveling direction of the vehicle); measurable distance (i.e., scan distance) of the LIDAR 2; the number of irradiation layers or the number (sensor number) of laser transmitters/receivers in the LIDAR 2; and an angle between layers that is an angle between neighboring irradiation layers. The above-mentioned number of irradiation layers herein indicates the number of layered scan planes irradiated with laser beams of the LIDAR 2. It is noted that, in cases where the LIDAR 2 performs a three-dimensional scan by moving the horizontal scan plane in the vertical direction, the scan range information may include information associated with the number of layered scan planes (i.e., the number of scanning lines) instead of the vertical angle range. For example, the storage unit 12 preliminarily stores, as the LIDAR specification information IL, these installation height information and scan range information which are measured in advance through experimental trials.

A description will be given of the configuration of the vehicle mounted device 1 by referring to FIG. 2A again. The sensor unit 13 includes sensors which detect the state of the vehicle such as a GPS receiver 32 and an IMU (Inertial measurement Unit) 33. According to the embodiment, the control unit 15 calculates the predicted own vehicle position Ppr on the basis of the output data of the sensor unit 13. The sensor unit 13 is an example of the "measurement unit" according to the present invention.

Examples of the input unit 14 include a button, a touch panel, a remote controller and an audio input device for user operations . The output unit 16 includes a display and/or a speaker which output under the control of the control unit 15.

The control unit 15 includes a CPU for executing programs and controls the entire vehicle mounted device 1. According to the embodiment, for example, the control unit 15 sends the point cloud information request signal Sr at predetermined time intervals to the sever device 4 through the communication unit 11, wherein the point cloud information request signal Sr includes the predicted own vehicle position Ppr calculated through the output data of the sensor unit 13 and the LIDAR specification information IL stored on the storage unit 12. At the time of receiving the map point cloud information Da through the communication unit 11 as a response to the point cloud information request signal Sr, the control unit 15 generates information ("error information dP"), which indicates the error (deviation) of the predicted own vehicle position Ppr, by matching the point cloud indicated by the map point cloud information Da with the point cloud indicated by the measured point cloud information Db outputted by the LIDAR 2. Then, the control unit 15 calculates an estimate value of the own vehicle position that is the predicted own vehicle position Ppr corrected by the error indicated by the error information dP. The control unit 15 is an example of the "position prediction unit", "transmission unit", "receiving unit" and "estimation unit" according to the present invention.

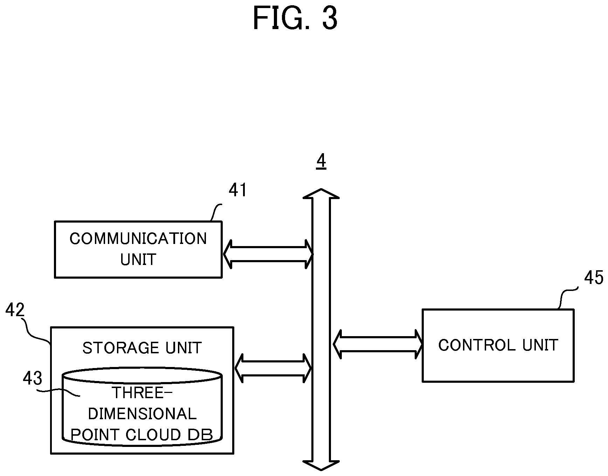

FIG. 3 is a block diagram illustrating a functional configuration of the server device 4. The server device 4 mainly includes a communication unit 41, a storage unit 42 and a control unit 45. These elements are connected to each other via a bus line. The communication unit 41 exchanges data with the vehicle mounted device 1 under the control of the control unit 45.

The storage unit 42 stores a program to be executed by the control unit 45 and information necessary for the control unit 45 to execute a predetermined processing. According to the embodiment, the storage unit 42 stores map data including the three-dimensional point cloud DB 43. The three-dimensional point cloud DB 43 is a database of information on three-dimensional point clouds which form the surfaces of features situated on or around roads registered on the map data. Each point cloud registered on the three-dimensional point cloud DB 43 is expressed by the three-dimensional coordinates that are longitude, latitude and height (i.e., altitude). Hereinafter, the coordinate system of each point cloud registered on the three-dimensional point cloud DB 43 is referred to as the "absolute coordinate system". It is noted that the point cloud information registered on the three-dimensional point cloud DB 43 may be generated based on point cloud information outputted by LIDAR capable of horizontal and vertical scanning. The point cloud information registered on the three-dimensional point cloud DB 43 may be the point cloud information itself outputted by LIDAR or three-dimensional point cloud information inductive of features generated based on the position information and shape information of the features which are stored on the map data. The point cloud information registered on the three-dimensional point cloud DB 43 is an example of the "feature information" according to the present invention.

The control unit 45 includes a CPU for executing programs and controls the entire server device 4. According to the embodiment, at the time of receiving the point cloud information request signal Sr from the vehicle mounted device 1 through the communication unit 41, the control unit 45 specifies (identifies) the scan target space of the LIDAR 2 based on the predicted own vehicle position Ppr and the LIDAR specification information IL included in the point cloud information request signal Sr. Then, the control unit 45 extracts from the three-dimensional point cloud DB 43 the map point cloud information Da associated with a point cloud whose positions are within the specified scan target space to thereafter send the extracted map point cloud information Da to the vehicle mounted device 1 through the communication unit 41. The control unit 45 is an example of the "acquisition unit", "output unit" according to the present invention and a computer which executes the program according to the present invention.

### [Own Position Estimation Process]

Next, the detail of the own position estimation process will be described below.

### (1) Functional Configuration

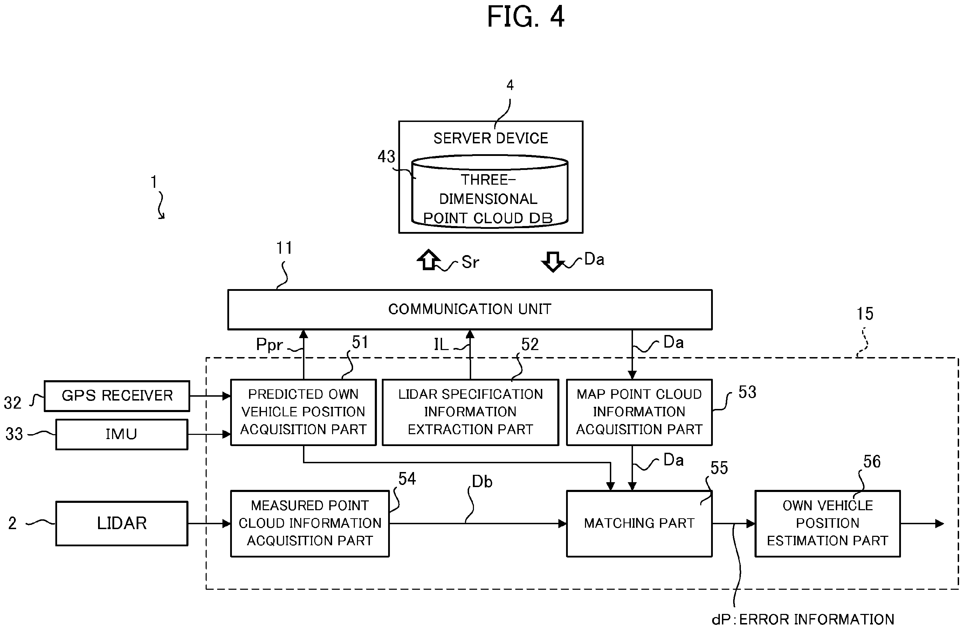

FIG. 4 is a block diagram illustrating functional configuration of the vehicle mounted device 1. As illustrated in FIG. 4, the control unit 15 of the vehicle mounted device 1 functionally includes a predicted own vehicle position acquisition part 51, a LIDAR specification information extraction part 52, a map point cloud information acquisition part 53, a measured point cloud information acquisition part 54, a matching part 55 and an own vehicle position estimation part 56.

The predicted own vehicle position acquisition part 51 predicts the traveling direction of the vehicle and the two or three-dimensional position including a current longitude and latitude on the basis of the output data of the GPS receiver 32 and the IMU 33. Then, through the communication unit 11, the predicted own vehicle position acquisition part 51 adds the predicted position information as the predicted own vehicle position Ppr to the point cloud information request signal Sr to thereby send it to the sever device 4 through the communication unit 11. The LIDAR specification information extraction part 52 extracts the LIDAR specification information IL stored on the storage unit 12 and adds the extracted LIDAR specification information IL to the point cloud information request signal Sr to thereby send it to the sever device 4 through the communication unit 11.

The map point cloud information acquisition part 53 receives, through the communication unit 11, the map point cloud information Da which the sever device 4 sends as a response to the point cloud information request signal Sr. Then, the map point cloud information acquisition part 53 supplies the received map point cloud information Da to the matching part 55. The measured point cloud information acquisition part 54 acquires the measured point cloud information Db outputted by the LIDAR 2 to supply it to the matching part 55. In this case, the map point cloud information acquisition part 53 receives only minimum map point cloud information Da that is essential for the matching part 55 to perform the matching process. Thus, the map point cloud information acquisition part 53 can suitably reduce the communication traffic and required storage capacity while suitably reducing the load of the matching process with the measured point cloud information Db.

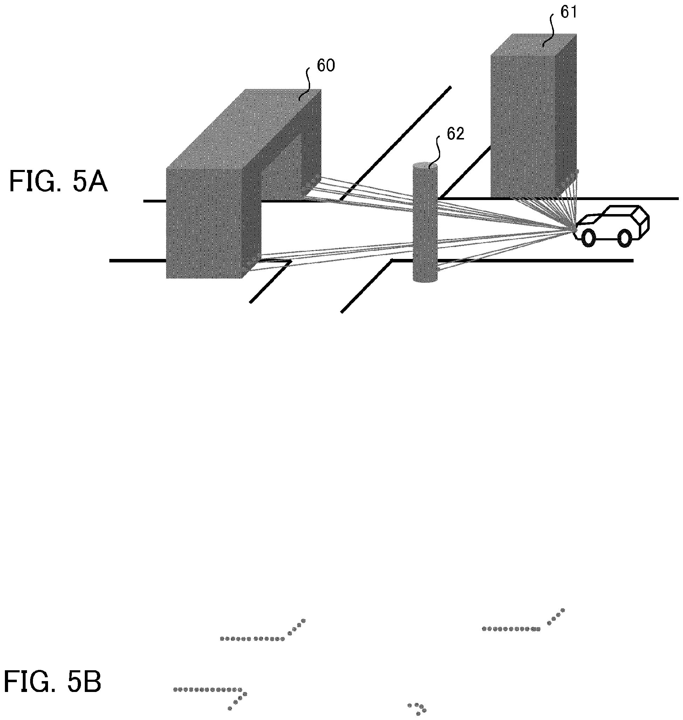

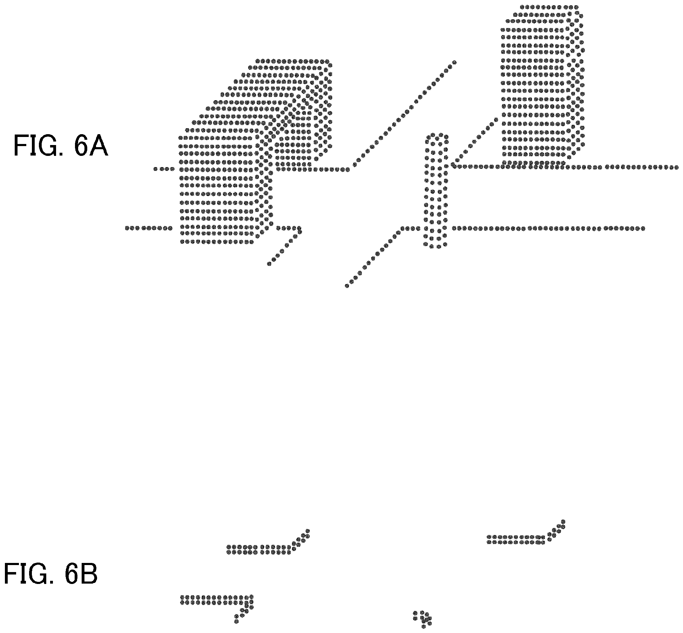

The matching part 55 generates the error information dP by matching (aligning) a point cloud indicated by the measured point cloud information Db acquired from the measured point cloud information acquisition part 54 with a point cloud indicated by the map point cloud information Da acquired from the map point cloud information acquisition part 53. For example, on the basis of the predicted own vehicle position Ppr acquired from the predicted own vehicle position acquisition part 51, the matching part 55 firstly converts the measured point cloud information Db that is expressed by the relative coordinate system with respect to the position and traveling direction of the vehicle mounted device 1 into data in the absolute coordinate system. Then, through a known matching method such as an ICP (Iterative Closest Point), the matching part 55 makes the point cloud indicated by the converted measured point cloud information Db in the absolute coordinate system correspond to the point cloud indicated by the map point cloud information Da expressed in the absolute coordinate system. Then, the matching part 55 calculates the vector quantity and the rotation angle which correspond to the displacement needed to align the point cloud of the converted measured point cloud information Db in the absolute coordinate system with the corresponding point cloud of the map point cloud information Da. Then, the matching part 55 supplies the own vehicle position estimation part 56 with the information on the calculated vector quantity and rotation angle as the error information dP. Specific examples of the matching part 55 will be explained by referring to FIGS. 5A and 5B and FIGS. 6A and 6B.

The own vehicle position estimation part 56 acquires the error information dP and the predicted own vehicle position Ppr from the matching part 55 and calculates an estimate value of the own vehicle position that is the predicted own vehicle position Ppr corrected based on the deviation of the position and posture indicated by the error information dP. The estimate value of the own vehicle position calculated by the own vehicle position estimation part 56 is to be used for various kinds of controls such as an autonomous driving and a route guidance.

### (2) Specific Example of Matching Process

FIG. 5A illustrates features 60 to 62 that are buildings and the like in the vicinity of the vehicle equipped with the vehicle mounted device 1 and that are irradiated with laser beams from the LIDAR 2. FIG. 5B illustrates a point cloud that indicates positions irradiated with the laser beams in FIG. 5A. As an example, FIGS. 5A and 5B illustrate a case where the LIDAR 2 only performs a horizontal scan.

In this case, the measured point cloud information acquisition part 54 acquires from the LIDAR 2 the measured point cloud information Db corresponding to the point cloud on the surfaces of the features 60 to 62 at the same height as the LIDAR 2. Besides, the matching part 55 converts the measured point cloud information Db acquired by the measured point cloud information acquisition part 54 into the three-dimensional coordinates in the absolute coordinate system by using the predicted own vehicle position Ppr.

FIG. 6A illustrates the visualized point cloud in the vicinity of the vehicle registered on the three-dimensional point cloud DB 43.

As illustrated in FIG. 6A, on the three-dimensional point cloud DB 43, there are registered point cloud information corresponding to the three-dimensional surfaces of the features 60 to 62 and point cloud information corresponding to the edges of the roads. Then, at the time of receiving the point cloud information request signal Sr, the sever device 4 specifies the scan target space of the LIDAR 2 based on the predicted own vehicle position Ppr and the LIDAR specification information IL including the installation height information and the scan range information that are included in the point cloud information request signal Sr. Then, the server device 4 extracts, from the three-dimensional point cloud DB 43, the map point cloud information Da corresponding to the point cloud whose positions are within the scan target space .

FIG. 6B illustrates the point cloud extracted from the point cloud illustrated in FIG. 6A and corresponding to the map point cloud information Da to be sent to the vehicle mounted device 1. In this case, the sever device 4 specifies the scan target space of the LIDAR 2 based on the LIDAR specification information IL and the predicted own vehicle position Ppr to extract the point cloud whose positions are within the specified scan target space.

According to the example in FIG. 6B, the sever device 4 recognizes the height of the irradiation plane of the LIDAR 2 based on the installation height information of the LIDAR specification information IL and extracts the point cloud situated within a predetermined distance from the recognized height. Preferably, in cases where the scan range information includes information associated with the vertical scan range, the sever device 4 may determine the range of the height of the point cloud to be extracted from the three-dimensional point cloud DB 43 in accordance with the information associated with the vertical scan range. In this case, the sever device 4 may make the range of the height of the point cloud to be extracted from the three-dimensional point cloud DB 43 coincide with the vertical scan range indicated by the scan range information. Instead, to cope with the variation of the irradiation plane of the LIDAR 2 due to the variation of the posture of the travelling vehicle, the sever device 4 may make the range of the height of the point cloud to be extracted from the three-dimensional point cloud DB 43 broader to some extent than the vertical scan range indicated by the scan range information. Besides, according to the example illustrated in FIG. 6B, the sever device 4 recognizes the scan range of the LIDAR 2 on the horizontal plane based on the scan range information of the LIDAR specification information IL and the predicted own vehicle position Ppr to thereby extract the point cloud of the features 60 to 62 situated in the scan range.

The sever device 4 may extract the point cloud in accordance with the number of the layered irradiation planes based on the information indicative of the number of the layered irradiation planes (or the number of the laser transmitter and receiver) included in the scan range information of the LIDAR specification information IL. The sever device 4 may determine the range of the height of the point cloud to be extracted from the three-dimensional point cloud DB 43 based on not only the information indicative of the number of the layered irradiation planes but also the information, which is included in the scan range information, indicative of the angle between neighboring irradiation planes.

It is noted that, if altitude is adopted as the scale of the height of the point cloud registered on the three-dimensional point cloud DB 43, the sever device 4 calculates the altitude of the irradiation plane of the LIDAR 2 by considering not only the installation height information but also the altitude of the road surface where the vehicle exists. In this case, for example, if the predicted own vehicle position Ppr included in the point cloud information request signal Sr includes information on the altitude of the vehicle based on the output data of the GPS receiver 32 and the like, the sever device 4 recognizes the altitude of the road surface where the vehicle exists based on the information on the altitude. In another example, if information on the altitude is included in the road data corresponding to the road where the vehicle exists, the sever device 4 recognizes the altitude of the surface of the road where the vehicle exists based on the information on the altitude.

Thereafter, the matching part 55 aligns the point cloud (i.e., the point cloud indicated by the measured point cloud information Db) in FIG. 5B converted into the absolute coordinate system with the point cloud in FIG. 6B (i.e., the point cloud indicated by the map point cloud information Da). Then, the matching part 55 generates the error information dP indicative of the vector quantity and the rotation angle which correspond to the deviation of the point cloud illustrated in FIG. 5B that is converted into the absolute coordinate system from the point cloud illustrated in FIG. 6B.

According to the example illustrated in FIGS. 5A to 6B, since the vehicle mounted device 1 receives from the sever device 4 a minimum map point cloud information Da which is essential for the matching part 55 to perform the matching process, the vehicle mounted device 1 can suitably reduce the communication traffic and required storage capacity while suitably reducing the load of the matching process.

### (3) Process Flow

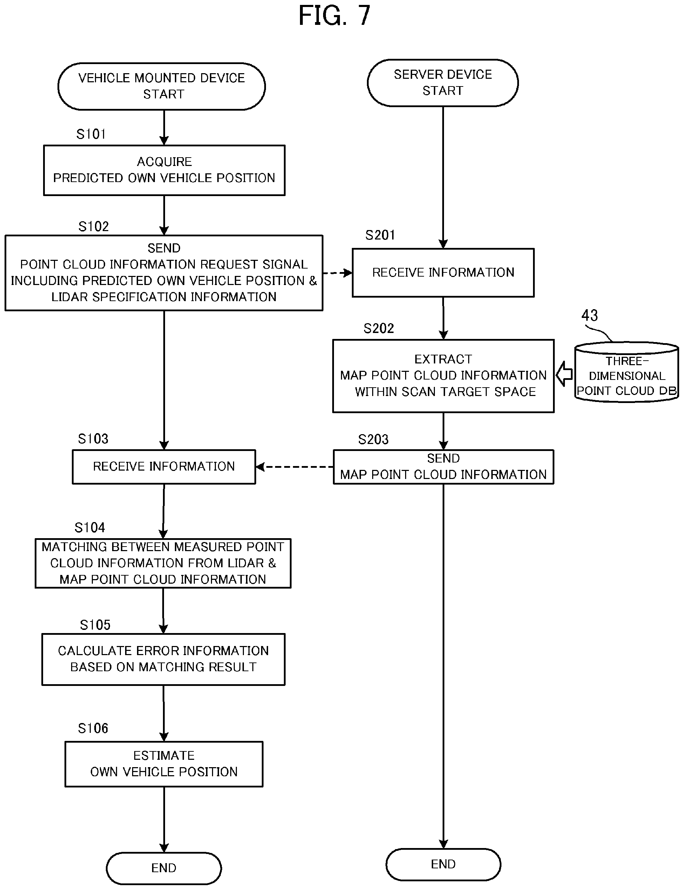

FIG. 7 is a flowchart indicative of the procedure of the own vehicle position estimation process according to the embodiment. The vehicle mounted device 1 repeatedly executes the flowchart in FIG. 7.

Firstly, on the basis of the output data of the GPS receiver 32 and the IMU 33 and the like, the vehicle mounted device 1 acquires the predicted own vehicle position Ppr indicative of the longitude, latitude and traveling direction at the present time (step S101) . It is noted that the predicted own vehicle position Ppr may also include information on the present latitude measured by the GPS receiver 32 and the like. Then, the vehicle mounted device 1 sends the sever device 4 the point cloud information request signal Sr including the predicted own vehicle position Ppr acquired at step S101 and the LIDAR specification information IL stored on the storage unit 12 (step S102).

In this case, the sever device 4 receives the point cloud information request signal Sr sent from the vehicle mounted device 1 (step S201). Then, on the basis of the predicted own vehicle position Ppr and the LIDAR specification information IL included in the point cloud information request signal Sr, the sever device 4 recognizes the scan target space that is a target space of scan by the LIDAR 2 in the absolute coordinate system and extracts from the three-dimensional point cloud DB 43 the map point cloud information Da corresponding to the point cloud situated in the scan target space (step S202). Then, the sever device 4 sends the map point cloud information Da extracted from the three-dimensional point cloud DB 43 to the vehicle mounted device 1 (step S203).

The vehicle mounted device 1 receives the map point cloud information Da from the sever device 4 (step S103). Then, the vehicle mounted device 1 performs the matching process by using the measured point cloud information Db acquired from the LIDAR 2 and the received map point cloud information Da (step S104). Then, the vehicle mounted device 1 calculates the error information dP based on the matching result (step S105). Thereafter, the vehicle mounted device 1 calculates the estimate value of the own vehicle position by correcting the predicted own vehicle position Ppr, which is calculated at step S101, on the basis of the error information dP (step S106).

As described above, the sever device 4 according to the embodiment stores the three-dimensional point cloud DB 43. At the time of receiving, from the vehicle mounted device 1, the point cloud information request signal Sr including the LIDAR specification information IL on specification (s) of a LIDAR 2 and the predicted own vehicle position Ppr, the server device 4 specifies a scan target space by the LIDAR 2. Then, the sever device 4 extracts, from the three-dimensional point cloud DB 43, the map point cloud information Da corresponding to a point cloud situated within the specified scan target space, and transmits the map point cloud information Da to the vehicle mounted device 1. In this case, the vehicle mounted device 1 receives only minimum map point cloud information Da that is essential to perform the matching process. Accordingly, it is possible to suitably reduce the communication traffic and required storage capacity while suitably reducing the load of the matching process with the measured point cloud information Db.

### [Modification]

Multiple server devices may constitute the above sever device 4. For example, a server device which stores the three-dimensional point cloud DB 43 and another server device which performs the process at step S201 to S203 in FIG. 7 may be separately configured as the sever device 4. When multiple server devices constitute the sever device 4, each of the server devices performs a predetermined processing by receiving information needed to perform the predetermined processing from other sever device (s) .

### BRIEF DESCRIPTION OF REFERENCE NUMBERS

- 1: Vehicle mounted device
- 2: LIDAR
- 4: Server device
- 11, 41: Communication unit
- 12, 42: Storage unit
- 13: Sensor unit
- 14: Input unit
- 15, 45: Control unit
- 16: Output unit
- 43: Three-dimensional point cloud DB

## Claims

1. An information output device comprising:
an acquisition unit configured to acquire specification information associated with specification(s) of an external detection device provided at a moving body; and
an output unit configured to extract, from feature information associated with features, a part of the feature information based on the specification information and to output the part, the feature information being stored on a storage unit.

2. The information output device according to claim 1,
wherein the output unit specifies a detection range by the external detection device based on the specification information and
wherein the output unit extracts and outputs the feature information associated with a feature situated within the detection range.

3. The information output device according to claim 1 or 2,
wherein the specification information includes information associated with height of installation position of the external detection device or
information associated with a target range of detection by the external detection device in a horizontal direction and/or vertical direction.

4. The information output device according to any one of claims 1 to 3,
wherein the acquisition unit receives the specification information and position information of the moving body from a terminal device which receives detection information of the external detection device, and
wherein the output unit sends the terminal device the part of the feature information extracted on a basis of the specification information and the position information.

5. A terminal device which moves together with a moving body equipped with an external detection device, the terminal device comprising:
a storage unit configured to store specification information associated with specification(s) of the external detection device;
a transmission unit configured to send the specification information to the information output device according to any one of claims 1 to 4;
a receiving unit configured to receive feature information from the information output device; and
an estimation unit configured to estimate a present position based on the feature information and detection information of the external detection device.

6. The terminal device according to claim 5,
wherein each of the detection information and the feature information is point cloud information, and
wherein the estimation unit estimates the present position based on error in position between a first point cloud indicated by the detection information and a second point cloud indicated by the feature information corresponding to the first point cloud.

7. The terminal device according to claim 5 or 6, further comprising
a position prediction unit configured to acquire a prediction value of the present position based on output data of a measurement unit,
wherein the estimation unit calculates an estimate value of the present position by correcting the prediction value based on the feature information and the detection information.

8. A control method executed by an information output device comprising:
an acquisition process to acquire specification information associated with specification(s) of an external detection device provided at a moving body; and
an output process to extract, from feature information associated with features, a part of the feature information based on the specification information and to output the part, the feature information being stored on a storage unit.

9. A program executed by a computer, the program making the computer function as:
an acquisition unit configured to acquire specification information associated with specification(s) of an external detection device provided at a moving body; and
an output unit configured to extract, from feature information associated with features, a part of the feature information based on the specification information and to output the part, the feature information being stored on a storage unit.

10. A storage medium storing the program according to claim 9.
